# EUROPEAN PATENT SPECIFICATION

(11) **EP 1 380 487 B1**
(45) Date of publication and mention of the grant of the patent: **11.01.2006**
(21) Application number: 03254325.8
(22) Date of filing: 08.07.2003
(51) Int. Cl.: B60T 17/22, B60T 7/10

(54) **Handbrake cable adjustment system**
Handbremskabelnachstellsystem
Système d'ajustement d'un frein à main

(30) Priority: 12.07.2002 GB 0216256
(43) Date of publication of application: 14.01.2004
(60) Divisional application: 05023988.8
(73) Proprietor: Integrated Display Systems Limited, Tyne and Wear, NE28 6BY (GB)
(72) Inventor: SMITH, Patricia Mary Renee, Wallsend, Tyne & Wear NE28 6BY (GB); HUTCHINSON, Barry Alexander, Wallsend, Tyne & Wear NE28 6BY (GB)
(74) Representative: Bardo, Julian Eason

(56) References cited:
- US-A- 5 181 440
- US-A- 5 613 412
- US-A- 5 983 745

## Description

The present invention relates to the adjustment of brake cables, such as handbrake cables on automotive vehicles. In particular, the present invention relates to the adjustment of such cables in a production environment.

Many automotive vehicles include disc brakes. Disc brakes can be actuated by a brake pedal. Pressing the brake pedal actuates a hydraulic cylinder in a unit known as a brake caliper. Brake pads are forced against the rotating disc of the disc brake system by the action of the hydraulic cylinder, thereby slowing or stopping the vehicle.

In addition to brake pedals, handbrakes are usually provided. (Handbrakes are sometimes referred to as parking brakes. The term "handbrake" will be used throughout this description but should be understood to be synonymous with the term "parking brake".) When the handbrake is applied, a lever operated system acts in place of the hydraulic cylinder of the disc braking system. A brake caliper lever is pulled by a cable that extends from the handbrake lever. The brake caliper lever forces the brake pads against the disc of the disc brake system, preventing the vehicle from being moved when parked.

With handbrake systems such as that described above it is important that the cable extending from the handbrake (the "handbrake cable") to the brake caliper lever is neither too slack nor too tight. If the handbrake cable is too slack, then the brakes will not be applied with sufficient force, even when the handbrake lever position suggests that the brakes are fully on. Conversely, if the handbrake cable is too tight, then the brakes will act to slow the vehicle even when the handbrake lever position suggests that the brakes are fully off. The handbrake cable should be tight enough so that the brakes are applied with sufficient force to prevent the vehicle from moving on a defined test hill.

It is known to set the handbrake cable in a production environment using the following three stage process:
1. Place the handbrake lever in a position in which the brakes should be fully on.
2. Adjust the handbrake cable length so that the tension within the cable is sufficient for the brake pads to be actuated with the desired force.
3. Release the handbrake lever to release the vehicle.

There are a number of problems with the known method for setting the handbrake cable length. The method requires an operator to accurately set the handbrake lever position, to adjust the cable length whilst monitoring the cable tension, and to release the handbrake lever after the cable has been adjusted.

In a high volume production environment, the requirement for an operator to perform three separate tasks in order for the handbrake cable to be adjusted is undesirable. Further, performing the tasks may require the operator to move in (for the first and third tasks) and out of (for the second) the vehicle, which is undesirable, particularly in a production environment. Furthermore, at least some of the operations involve some skill on behalf of the operator.

An alternative method of setting the handbrake cable position is to place the handbrake lever in a position in which the brakes should be fully off and then to adjust the handbrake cable length so that the brake pads are almost in contact with the brake disc. This can be achieved manually by adjusting the length of the handbrake cable and simultaneously rotating the brake discs and feeling for the effects of the brake pads being in contact with the brake discs. This is clearly impractical in a production environment.

US 5,613,412 describes a slack adjuster check tool for determining and adjusting the slack in the mechanism that actuates the brake shoes in each of the wheel brakes of many large vehicles. The tool includes a holding member for engaging the slack adjuster and a retention hook and/or chain to hold the tool in place. The retention member is positioned to allow the user to observe the slack by exerting force on the handle to determine how much freedom of motion there is in the slack adjuster. Openings are provided in the holding member to provide direct access to adjustment heads on slack adjusters.

It is an object of the present invention to address at least some of the above-mentioned problems.

The present invention provides a brake cable adjustment system comprising:
a brake monitor adapted to detect the position of a brake operating lever; and
a controller adapted to receive information from the brake monitor regarding the position of the brake operating lever,

wherein the brake monitor includes at least one sensor device for measuring the position of the brake operating lever; and
wherein the controller is adapted to issue instructions for adjusting the effective length of a brake cable, in order to adjust the position of the brake operating lever.

The position controller of the present invention provides a feedback system in which the brake monitor measures the position of the brake operating lever, the controller receives information from the brake monitor and issues instructions for adjusting the effective brake cable length. If those instructions are carried out, then the position of the brake operating lever is adjusted. That adjustment is detected by the brake monitor.

The at least one sensor may be mated with the brake operating lever in some way. In the preferred embodiment, the at least one sensor device is in sprung contact with the brake caliper lever. When a sprung contact is used, the sensor is urged against the brake operating lever and follows the motion of that lever, thereby providing a relatively straightforward means of arranging for position information to be detected.

Two or more sensor devices may be provided, those sensor devices being positioned at different locations on the brake monitor. Providing two or more sensor devices enables lever position differences between different brake systems to be accommodated. For example, saloon and estate cars may have different braking systems with brake levers in different positions. By providing more than one sensor, a single brake monitor can be used for more than one brake system.

In a disc brake system, the brake monitor is a brake caliper monitor and the brake operating lever is a brake caliper operating lever. In an alternative embodiment of the invention, drum brakes are used rather than disc brakes.

At least one display may be provided for conveying information regarding said instructions to a user. Providing a display enables the user to be able to manually adjust the effective length of the brake cable in response to said instructions. In the preferred embodiment, LED displays are used but other displays, such as filament lamps, LCD displays and alphanumeric displays may be used.

Alternatively, or in addition to the provision of the display, a tool adapted to adjust the effective length of said brake cable in response to said instructions from the controller may be provided. The effective length of the brake cable may be adjustable via a cable adjustment arrangement. Preferably, the cable adjustment arrangement is a cable adjustment nut.

The user can manually adjust the cable adjustment arrangement in response to instructions, those instructions being conveyed to the user via the display. Alternatively, or in addition, the tool may adjust the cable adjustment arrangement in response to said instructions.

By providing a tool that adjusts the cable adjustment arrangement, thereby adjusting the effective length of the brake cable, the closed feedback system described above can be used without operator input. Thus, once the operator has set up the system, he need perform no further operation.
Thus, the system is well adapted for use in a production environment.

The brake monitor is preferably arranged to measure position relative to a start position and the brake monitor may include an activation switch so that the measured position of the sensor can be determined relative to the measured position when the activation switch is activated. The position information provided by the sensor would not then be dependent on the precise location of the brake monitor.

The controller may receive information from the brake monitor in a number of ways, such as via a wireless link (e.g. a UHF link) or via a cable. An aerial may be provided for transmitting the information and in one embodiment that aerial is located in a handle of the brake monitor.

The brake monitor may include a microprocessor for processing data regarding the position of the brake operating lever.

In use, the brake cable adjustment system of the present invention is used to set the effective length of the brake cable. In a preferred embodiment, the brake monitor is detachably mountable to a brake caliper of a disc brake system such that the position controller can be mounted to the brake caliper, the brake cable adjusted and the position controller removed from the brake caliper. When used in that manner, the position controller is only attached to the brake caliper when it is required i.e. only when the brake caliper lever operating position is adjusted. In an alternative embodiment, a drum brake system is used instead of a disc brake system. If a drum brake system is used, the brake cable adjustment system monitors and controls the position of the operating lever of a drum brake shoe.

Guide means may be provided for ensuring correct alignment of the brake caliper monitor and the brake caliper and releasable clamping means may be provided for clamping the brake caliper monitor to the brake caliper.

The present invention also provides a method of controlling the position of a brake operating lever, the method comprising the steps of:
measuring the position of the brake operating lever using a brake monitor, the brake monitor including at least one sensor device for measuring the position of the brake operating lever;
transmitting information regarding the position of the brake operating lever to a controller; and
the controller issuing instructions for adjusting the effective length of a brake cable, in order to adjust the position of the brake operating lever.

Thus the method provides a feedback system in which the position of the brake operating lever is measured by the brake monitor, that information is transmitted to the controller which issues instructions in response to the position information to adjust the effective length of the brake cable, thereby adjusting the brake operating lever position, which adjustment is detected by the brake monitor.

In one embodiment of the invention, a disc brake system is used. In such a system, the brake operating lever is a brake caliper operating lever and the brake monitor is a brake caliper monitor. In an alternative embodiment, a drum brake system is used.

The intended brake operating lever position may be set by a user-actuated lever. Generally, the user-actuated lever is a handbrake operated by the user of the vehicle.

One operation in accordance with the invention comprises the steps of:
setting the user-actuated lever to a position indicating that the brake operating lever is in an off position;
the controller issuing instructions to adjust the effective length of the brake cable; and
using the brake monitor to measure the distance moved by the brake operating lever in response to the adjustment instructions,

wherein the controller continues to issue instructions to adjust the effective length of the brake cable until the brake operating lever has moved through a pre-defined distance.

Vehicles with such braking systems can be supplied with brake operating lever in an off position. The method then enables the effective length of the brake cable to be adjusted to an optimum position under the control of the controller, either with or without operator assistance.

The predefined distance is set so that the brake operating lever moves to a position where a braking action is about to begin. If the brake system is a disc brake system, then the brake operating lever may move to a position where brake pads associated with the disc brake system are almost in contact with a brake disc of the disc brake system. If the brake system is a drum brake system, then the brake operating lever may move to a position where brake shoes associated with the drum brake system are almost is contact with a drum brake of the drum brake system.

On newly assembled vehicles, the distance by which the operating levers should be moved in order to move the brake pads or brake shoes so that they are almost in contact with the brake disc or drum respectively (generally considered to be the optimum position) is usually known. For disc brake systems, that distance is typically of order of 2.7mm. In other systems, that distance may be of the order of 2mm. Other distances can be accommodated.

In a modified embodiment, the distance travelled by the brake lever is controlled and set to the predefined distance (such as 2mm or 2.7mm). In systems where there are two brake systems, each having a brake operating lever, the distance travelled by the second brake operating lever is measured. Ideally, the second brake operating lever will move in synchronism with the first brake operating lever and so will also move by the predetermined distance; however, this may not be the case. In the modified embodiment, the brake adjustment is accepted provided the second brake operating lever has moved by at least a certain distance. In some systems, that distance may be set in the order of 0.75mm. In other systems, that distance may be set in the order of 0.1mm. The controller can be set to accommodate other distances.

In an alternative operation of the invention, the predefined distance referred to above is set so that the brake operating lever moves to a maximum braking position, the method further comprising the steps of, using the controller to issue instructions to adjust the effective length of the brake cable until the brake operating lever has moved back to its start position. If a disc brake system is being used, then the brake caliper operating lever moves from a start position, wherein brake pads associated with the disc brake system are not in contact with a brake disc of the disc brake system, to a maximum braking position, wherein the brake pads are firmly in contact with the brake disc and back to the start position. If a drum brake system is being used, then the brake operating lever moves from a start position, wherein brake shoes associated with the drum brake system are not in contact with a brake drum of the drum brake system, to a maximum braking position, wherein the brake shoes are firmly in contact with the brake drum and back to the start position.

The brake operating lever may move by a distance in the range of 10 to 25mm from the start position to the maximum braking position. In some known disc brake systems, a distance of 17mm sets the brake caliper operating lever to a maximum braking position. Other distances can be accommodated.

The method of moving the brake operating lever from a start position to a maximum braking position and back again is known as scragging and is intended to remove stretch from the handbrake cable and other components of the braking system. Preferably, the scragging step described above is repeated a number of times.

Information regarding the instructions may be displayed to a user using a display. That display may be an LED display but could be another form of display, such as an LCD or alphanumeric display, or simply filament lamps. The user may have the option of manually adjusting the effective length of the brake cable in response to said instructions.

Alternatively, or in addition to the display of information using displays such as LED displays, the instructions are preferably provided to a tool that is adapted to adjust the effective length of said brake cable in response to said instructions.

By providing a tool that adjusts the cable adjustment arrangement, thereby adjusting the effective length of the brake cable, the closed feedback system described above can be used without operator input. Thus, once the operator has set up the system, he need perform no further operation.
Thus, the method is well adapted for use in a production environment.

In one embodiment of the method of the invention, the brake monitor measures the lever position relative to the starting position of the lever. Thus, the position information provided by the sensor is not dependent on the precise location of the brake monitor. To achieve this, an activation switch may be provided, wherein the position measured by the brake monitor during the adjustment operation is relative to the measured position when the activation switch is activated.

The controller may receive information from the brake monitor via a wireless link. Alternatively, the controller may receive information from the brake monitor via a cable.

In use, the brake monitor may be attached to a brake caliper of a disc brake system before the steps of controlling the position of the brake operating lever are performed. After those steps have been completed the brake monitor is preferably removed from the brake caliper. Similarly, the brake monitor may be attached to a drum brake system before the steps of controlling the position of the brake operating lever of the drum brake system are performed and the brake monitor is preferably removed after those steps have been completed.

Also described is a brake monitor for measuring the position of a brake operating lever, the brake monitor comprising at least one sensor device arranged to measure the position of the brake caliper operating lever.

The brake monitor can be used to monitor the position of a brake operating lever and can be used to set the position of the operating lever to an optimum position. The brake monitor is well adapted for use in a production environment.

The at least one sensor device may be mated with the brake operating lever. In particular, the at least one sensor device may be in sprung contact with the brake operating lever. The use of a spring contact provides a simple but effective position sensor.

The brake monitor may include two or more sensors devices positioned at different locations on the brake monitor. The brake operating lever that is being monitored may be positioned in different places for different braking systems. By providing more than one sensor, a single brake monitor can be used for more than one brake system.

The brake monitor may be arranged to measure position relative to a start position. In order to achieve this, the brake monitor may include an activation switch, the relative position of the brake operating lever being determined with reference to the measured position of the brake operating lever when the activation switch is activated. The position information provided by the sensor would not then be dependent on the actual position of the brake monitor.

The brake monitor may comprise a transmitter for transmitting information regarding the position of the brake operating lever to a brake operating lever position controller.

The controller may receive information from the brake monitor in a number of ways, such as via a wireless link (e.g. a UHF link) or via a cable. An aerial may be provided for transmitting the information and in one embodiment that aerial is located in a handle of the brake monitor.

The brake monitor may include at least one display for conveying information regarding the position of the brake operating lever to a user and/or for providing instructions for adjusting the brake cable. Thus, the user can manually adjust the cable adjustment arrangement in response to those instructions. The at least one display may comprise an LED display, but other suitable displays may be used.

The brake monitor may further comprise a microprocessor for processing data regarding the position of the brake operating lever.

If the brake system is a disc brake system, the brake monitor is preferably detachably mountable to a brake caliper of the disc brake system, the brake caliper including a brake caliper operating lever. The brake caliper monitor may also include guide means for ensuring correct alignment of the brake caliper monitor and the brake caliper and may include releasable clamping means for clamping the brake caliper monitor to the brake caliper. Thus, the brake caliper monitor need only be attached to the rest of the brake system when adjustment of the effective length of the brake cable is required. If the brake system is a drum brake system, the brake monitor is preferably detachably mounted to the brake drum.

By way of example only, embodiments of the present invention will now be described with reference to the accompanying drawings, of which:
Figure 1 shows a brake caliper monitor in accordance with the present invention mounted to a disc brake system;
Figure 2 shows a brake cable adjustment system in accordance with the present invention;
Figure 3 is a perspective view from below of a brake caliper monitor in accordance with the present invention;
Figure 4 is a plan view of the brake caliper monitor of Figure 3.
Figure 5 shows a rear braking system used in an alternative embodiment of the present invention;
Figure 6 is an exploded view of a brake drum assembly used in the braking system of Figure 5.

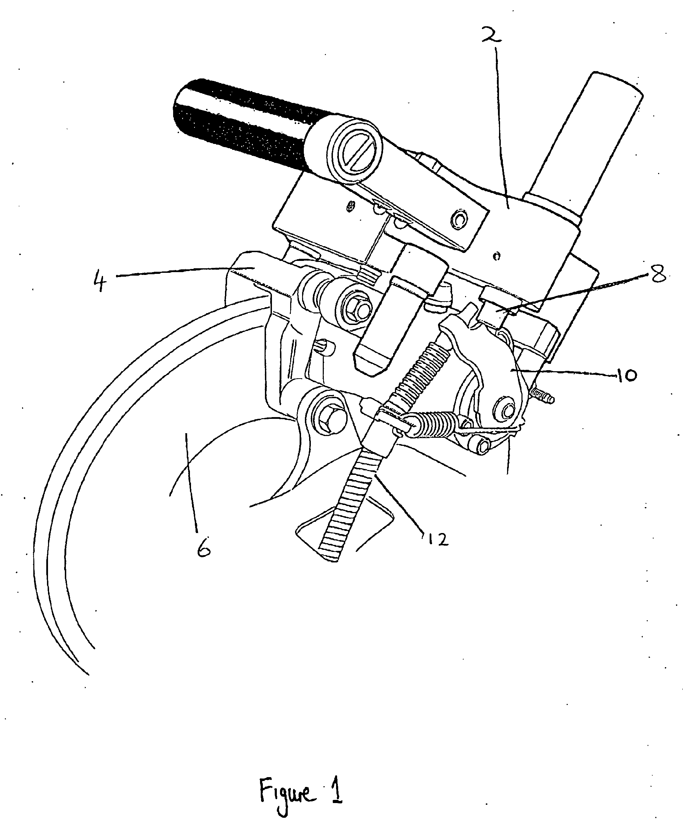

Figure 1 shows a brake caliper monitor 2 used with a disc brake system. The brake caliper monitor 2 is mounted on a brake caliper 4. Brake pads within the brake caliper 4 operate on a brake disc 6. The brake caliper monitor 2 includes a sensor 8 in sprung contact with a caliper operating lever 10. A brake cable 12 is attached at one end to the caliper operating lever 10 and at the other end to a handbrake lever (not shown).

The pressing of the brake pads against the brake disc 6 can be as a result of an actuation, by depressing a brake pedal, of an hydraulic cylinder within the brake caliper 4 or as a result of an actuation of the caliper operating lever 10 in response to the actuation of the handbrake lever, or both.

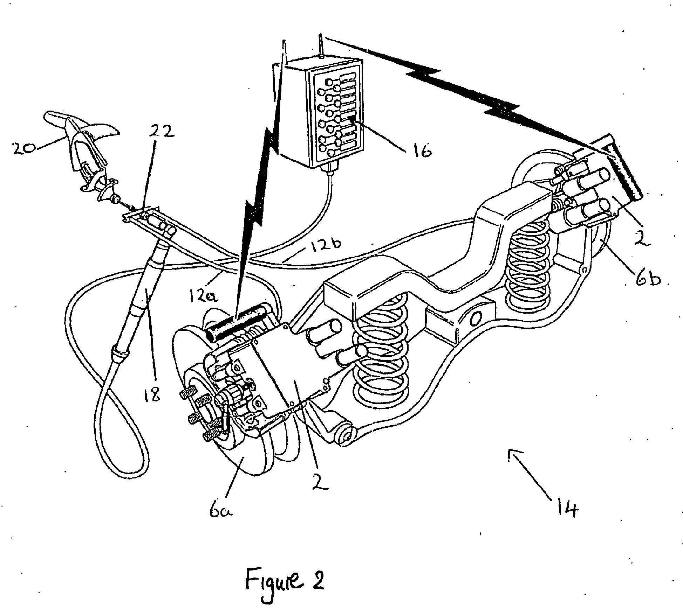

Figure 2 shows a brake cable adjustment system indicated generally by the reference numeral 14. The system 14 includes first and second rear brake discs 6a and 6b that form the rear braking system of a vehicle. A brake caliper monitor 2 is mounted on each rear brake disc for the duration of the brake cable adjustment process. The brake cable adjustment system also includes a central controller 16, a power tool 18, a handbrake lever 20 and a handbrake cable adjustment nut 22. Two brake cables 12a and 12b extend from the brake cable adjustment nut to the first and second rear brake discs 6a and 6b respectively.

The brake caliper monitors 2 detect the position of the brake caliper operating levers of the brake discs 6a and 6b and transmit that information to the central controller 16 via a wireless link. The central controller is used to control the power tool 18.

In use, the power tool 18 is attached to the handbrake cable adjustment nut 22. The tool 18 then adjusts the nut under the control of the central controller 16. The adjustment of the nut 22 adjusts the position of the caliper operating levers 10 and the change in position is detected by the sensors 8 of the brake caliper monitors 2.

Thus, a closed loop feedback system exists whereby the central controller 16 controls the action of the tool 18, the effect of the tool 18 is detected by the sensors 8, and the output of the sensors is transmitted back to the central controller 16.

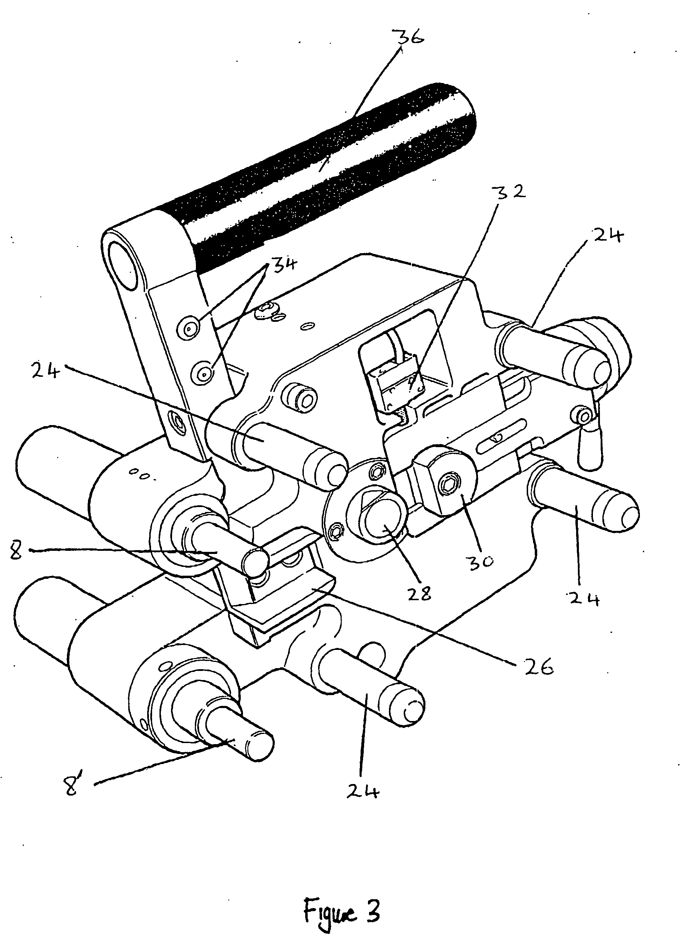

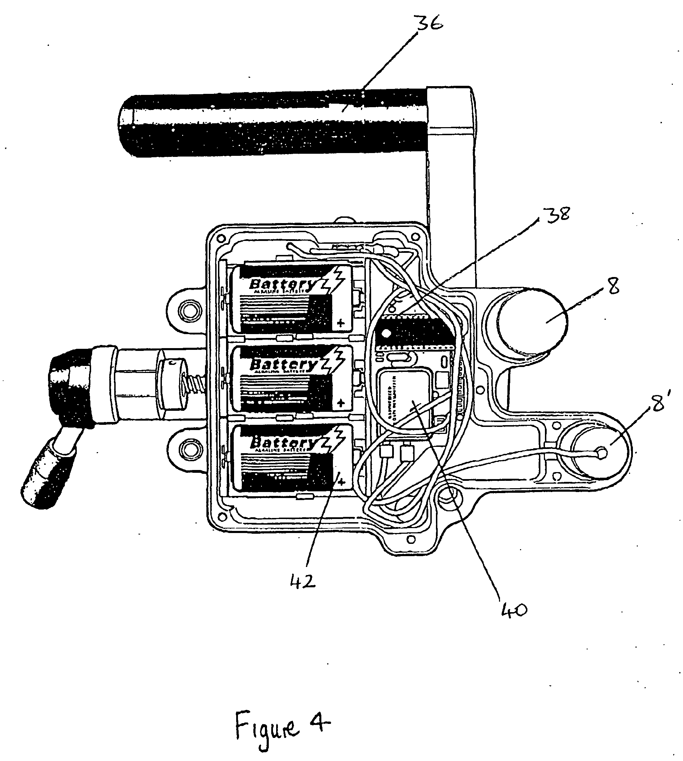

One of the brake caliper monitors 2 is shown in more detail in Figures 3 and 4. The brake caliper monitor 2 includes two sensors 8 and 8', guide legs 24, locator 26, holding magnet 28, lever operated clamp 30, switch 32, light emitting diodes (LEDs) 34, handle 36, microprocessor 38, transmitter 40 and batteries 42.

As noted above, in use, a sensor is in sprung contact with the caliper operating lever 10 that is being monitored. The brake caliper lever position may be different for different brake systems, for example, saloon and estate cars may have different brake systems with brake caliper levers in different positions. By providing more than one sensor, a single brake caliper monitor can be used for more than one brake system.

Of course, sensors other than the sensor described above may be used. For example, laser triangular measuring systems, optical beam systems, inductive measuring systems and capacitive measuring systems are examples of the many sensor systems that could be used to measure the distance moved by the caliper operating lever 10.

Guide legs 24 and a locator 26 are provided in order to assist the operator in positioning the brake caliper monitor 2 on the brake caliper. Once in place, the magnet 28 and the lever operated clamp 30 hold the brake caliper monitor in place. Of course, devices other than magnets and clamps could be used for holding the brake caliper monitor in place and the guide legs and locators could take other forms or could be omitted.

The switch 32 is operated when the brake caliper monitor 2 is in position and is ready to monitor the position of the brake caliper operating lever 10, thereby activating the position monitor. The position of the caliper lever at this stage is measured by the sensor and all future measurements are made relative to this initial position. Thus the measurement system measures a relative position and is therefore not dependent upon then the precise location of the brake caliper monitor.

Position data from the sensor 8 (or from sensor 8' when that sensor is in use) is passed to the microprocessor 38. That data is processed by microprocessor 38 before being transmitted to the central controller 16 by a radio transmitter 40 via an aerial contained in the handle 36.

The wireless link may be a UHF radio link or any other suitable link. Alternatively, the brake caliper monitor 2 and the central controller 16 may be linked by cables.

As noted above, in the preferred embodiment, the brake caliper monitor 2 transmits position information to a central controller 16, which central controller activates and controls a tool 18 for adjusting the length of the brake cables 12a and 12b. However, LEDs 34 are also provided to enable the brake caliper monitor 2 to be used without the controller 16 and tool 18 (or, alternatively, with the controller 16 but without the tool 18). The operator can manually turn the handbrake adjustment nut 22 in response to LED signals.

A number of operations can be performed with the brake cable adjustment system described above. A number of examples are outlined below. In each of the operations outlined below, the vehicle is assembled with the handbrake lever in the fully off position.

In a first operation, the operator attaches the tool 18 to the handbrake cable adjustment nut 22. Under the control of the central controller 16, the tool 18 adjusts the effective length of the handbrake cables 12a and 12b, without operator intervention, until the caliper levers have travelled through a pre-defined distance, the distance of travel being measured by the brake caliper monitor 2. The pre-defined distance is set to move the caliper operating levers 10 such that the brake pads are almost in contact with the brake disc. This is considered to be the optimum position for correct handbrake operation.

On a newly assembled vehicle, the distance by which the caliper operating levers 10 should move in order to move the brake pads into the optimum position is known. Indeed, brake components are usually manufactured with sufficiently high precision to enable that distance to be specified quite accurately. In many brake systems, that distance may be of the order of 2mm, but other distances can be accommodated.

In a second operation, the operator attaches the tool 18 to the handbrake cable adjustment nut 22. Under the control of the central controller 16, the tool 18 adjusts the cable adjustment nut 22 so that the caliper levers 10 travel through a pre-determined distance, the distance of travel being measured by the brake caliper monitor 2. The predefined distance is such that the brake pads are pulled hard against the brake discs. That pre-defined distance may be of the order of 17mm. The tool 18 then, under the control of the central controller 16, returns the caliper levers to their start positions. Again, distances other than 17mm can be accommodated.

The second operation described above is intended to remove unwanted elastic elongation from the braking system and is known as "scragging". The cycle described may be repeated a number of times.

In a third operation, the operator attaches the tool 18 to the handbrake cable adjustment nut 22. Under the control of the central controller 16, the tool 18 adjusts the cable adjustment nut so that one of the caliper levers 10 travels through a pre-determined distance, the distance of travel is intended to place the caliper lever in the optimum position for correct handbrake operation and, as discussed above, that distance is 2mm for many brake systems. Again, other distances can be accommodated.

In the third operation described above, the distance travelled by one of the caliper levers 10 is measured by the brake caliper monitor 2. Ideally, the second caliper lever in the brake system will move in synchronism with the first and therefore reach the same position. In practice, it is often acceptable that when one caliper lever is in the desired setting position, the other caliper lever has moved by at least a given distance. Some known systems set that distance as at least 0.75 mm: other known systems set that distance as at least 0.1mm. Clearly, other distances can be accommodated.

The controller may be arranged to perform any combination of the three operations outlined above.

The operator may also perform the operations outlined above under the guidance of signals from the LEDs 34. For example, in the first method, a first LED may indicate that the operator should begin adjusting the handbrake cable adjustment nut 22 and a second LED may indicate when the brake calipers have travelled through the predetermined distance. Further, display systems other than LEDs can be used to convey information and instructions to the user of the system. Example display systems include filament lamps and alphanumeric displays. For example, an alphanumeric display may give simple instructions in the form of a text message.

The embodiments of the invention described above all use disc brakes. However, the invention can also be applied to systems using drum brakes.

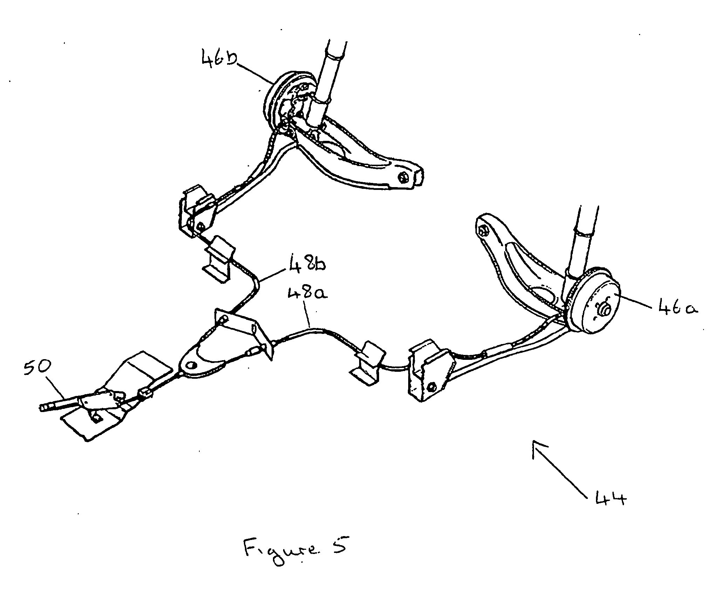

Figure 5 shows a drum brake system, indicated generally by the reference numeral 44 that can be used with the present invention. The drum brake system 44 comprises drum brakes 46a and 46b, and handbrake cables 48a and 48b extending from a handbrake lever 50 to drum brakes 46a and 46b respectively.

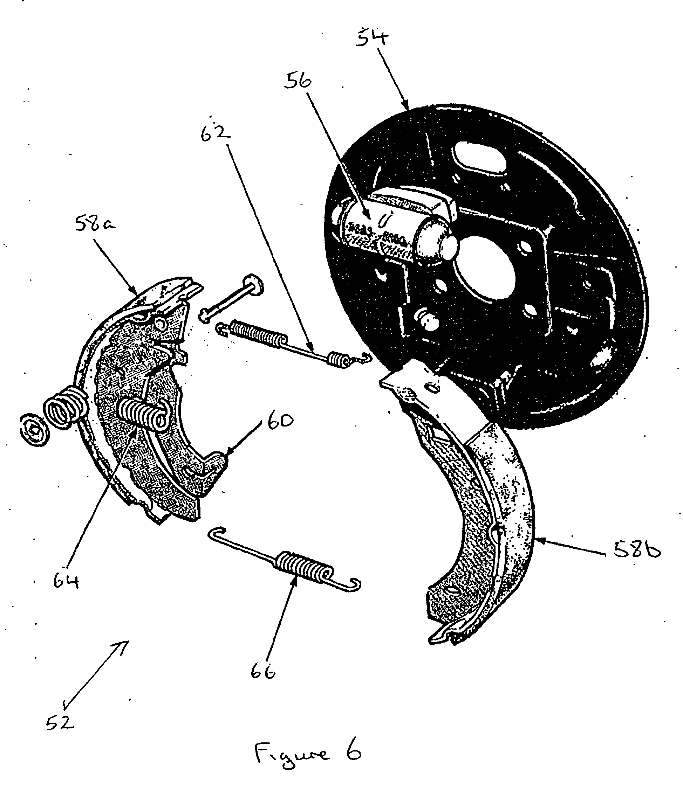

Figure 6 is an exploded view of a drum brake assembly indicated generally by the reference numeral 52. Drum brake assembly 52 comprises back plate 54, hydraulic cylinder 56, brake shoe halves 58a and 58b, brake shoe operating lever 60 and springs 62, 64 and 66. The brake shoe assembly 52 is positioned inside a brake drum (not shown).

The drum brake system may be operated by a brake pedal. Pressing the brake pedal actuates the hydraulic cylinder 56. The activation of the hydraulic cylinder forces the brake shoe halves 58a and 58b outwards and into contact with the brake drum (not shown), thereby slowing or stopping the vehicle.

The drum brake system can also be operated by a handbrake lever. When the handbrake is applied, a lever operated system acts in place of the hydraulic cylinder 56 in the same manner as in the disc brake system described above. The brake shoe operating lever 60 is pulled by a handbrake cable extending from a handbrake lever. The brake shoe operating lever forces the brake shoe halves 58a and 58b outwards and into contact with the brake drum (not shown), thereby preventing the vehicle from being moved when parked.

As with the disc brake system described above, it is important that the handbrake cable extending from the handbrake lever to the brake shoe operating lever is neither too tight (so that the brake drum acts to slow the vehicle even when the handbrake lever position suggests that the brakes a fully off) or too slack (so that the brakes will not be applied with sufficient force even when the handbrake lever position suggests that the brakes are fully on).

The brake shoe operating lever position can be controlled in the same manner as the brake caliper operating lever of the disc brake system described above.

## Claims

1. A brake cable adjustment system (14) comprising:
a brake monitor (2) adapted to detect the position of a brake operating lever (10;60); and
a controller (16) adapted to receive information from the brake monitor regarding the position of the brake operating lever,
wherein the brake monitor includes at least one sensor device (8,8') for measuring the position of the brake operating lever; and
wherein the controller is adapted to issue instructions for adjusting the effective length of a brake cable (12a, 12b; 48a, 48b), in order to adjust the position of the brake operating lever (10;60).

2. A system as claimed in claim 1, wherein, in use, the at least one sensor device (8,8') is in sprung contact with the brake operating lever.

3. A system as claimed in claim 1 or claim 2 and further comprising at least one display (34) for conveying information regarding said instructions to a user.

4. A system as claimed in claim 3, wherein the user manually adjusts the effective length of the brake cable in response to said instructions.

5. A system as claimed in any one of claims 1 to 3 and further comprising a tool (18) adapted to adjust the effective length of said brake cable in response to said instructions from the controller.

6. A system as claimed in any preceding claim and further comprising a cable adjustment arrangement, wherein the effective length of the brake cable is adjustable via the cable adjustment arrangement.

7. A system as claimed in any preceding claim, wherein the brake monitor (2) is arranged to measure position relative to a start position.

8. A system as claimed in any preceding claim, wherein the brake monitor (2) is detachably mountable to a brake caliper of a disc brake (6a, 6b), wherein the brake operating lever is a brake caliper operating lever.

9. A system as claimed in any one of claims 1 to 8, wherein the brake monitor (2) is detachably mountable to a drum brake system (46a, 46b).

10. A method of controlling the position of a brake operating lever (10;60), the method comprising the steps of:
measuring the position of the brake operating lever using a brake monitor, the brake monitor (2) including at least one sensor device for measuring the position of the brake operating lever;
transmitting information regarding the position of the brake operating lever to a controller (16); and
the controller issuing instructions for adjusting the effective length of a brake cable (12a, 12b;48a, 48b), in order to adjust the position of the brake operating lever (10;60).

11. A method as claimed in claim 10 wherein, in use, the intended brake operating lever position is set by a user-actuated lever (20;50).

12. A method as claimed in claim 11 and further comprising the steps of:
setting the user-actuated lever (20;50) to a position indicating that the brake operating lever (10;60) is in an off position;
the controller (16) issuing instructions to adjust the effective length of the brake cable; and
using the brake monitor (2) to measure the distance moved by the brake operating lever in response to the adjustment instructions,
wherein the controller continues to issue instructions to adjust the effective length of the brake cable until the brake operating lever has moved through a pre-defined distance.

13. A method as claimed in claim 12, wherein the predefined distance is set so that the brake operating lever (10;60) moves to a position where a braking action is about to begin.

14. A method as claimed in claim 12, wherein the predefined distance is set so that the brake operating lever (10;60) moves to a maximum braking position, the method further comprising the steps of using the controller (16) to issue instructions to adjust the effective length of the brake cable until the brake operating lever has moved back to its start position.

15. A method as claimed in any one of claims 10 to 14 and further comprising the step of displaying information regarding the said instructions to a user using a display (34).

16. A method as claimed in any one of claims 10 to 15 and further comprising the step of issuing said instructions to a tool (18) adapted to adjust the effective length of said brake cable in response to said instructions.

17. A method as claimed in any one of claims 10 to 16, wherein the brake monitor (2) measures position relative to a start position.

18. A method as claimed in any one of claims 10 to 17 and further comprising the step of attaching the brake monitor (2) to a brake caliper prior to controlling the position of the brake operating lever.

## Patentansprüche

1. Bremssell-Einstellsystem (14), aufweisend:
eine Bremsenkontrolleinrichtung (2), die dazu ausgebildet ist, die Position eines Bremsbetätigungshebels (10; 60) zu detektieren; und
eine Steuerung (16), die dazu ausgebildet ist, information hinsichtlich der Position des Bremsbetätigungshebels von der Bremsenkontrolleinrichtung zu empfangen,
wobei die Bremsenkontrolleinrichtung mindestens eine Sensorvorrichtung (8, 8') zum Messen der Position des Bremsbetätigungshebels aufweist; und
wobei die Steuerung dazu ausgebildet ist, Angaben zum Einstellen der wirksamen Länge eines Bremssells (12a, 12b; 48a, 48b) zu erteilen, um die Position des Bremsbetätigungshebels (10; 60) einzustellen.

2. System nach Anspruch 1,
wobei im Gebrauch die mindestens eine Sensorvorrichtung (8, 8') in Federkontakt mit dem Bremsbetätigungshebel steht.

3. System ach Anspruch 1 oder Anspruch 2,
weiterhin mit mindestens einer Anzeige (34) zum Liefern von Information hinsichtlich der Angaben an einen Benutzer.

4. System nach Anspruch 3,
wobei der Benutzer die wirksame Länge des Bremsseils nach Maßgabe der Angaben manuell einstellt.

5. System nach einem der Ansprüche 1 bis 3,
weiterhin mit einem Werkzeug (18), das zum Einstellen der wirksamen Länge des Bremsseils nach Maßgabe der Angaben von der Steuerung ausgebildet ist.

6. System nach einem der vorausgehenden Ansprüche,
weiterhin mit einer Seileinstellanordnung, wobei die wirksame Länge des Bremssells über die Selleinstellanordnung einstellbar ist.

7. System nach einem der vorausgehenden Ansprüche,
wobei die Bremsenkontrotteinrichtung (2) dazu ausgebildet ist, die Position relativ zu einer Ausgangsposition zu messen.

8. System nach einem der vorausgehenden Ansprüche,
wobei die Bremsenkontrolleinrichtung (2) an einem Bremssattel einer Scheibenbremse (6a, 6b) lösbar anbringbar ist und wobei es sich bei dem Bremsbetätigungshebel um einen Bremssattel-Betätigungshebel handelt.

9. System nach eine der Ansprüche 1 bis 8,
wobei die Bremsenkontrolleinrichtung (2) an einem Trommelbremssystem (46a, 46b) lösbar anbringbar ist.

10. Verfahren zum Steuern der Position eines Bremsbetätigungshebels (10; 60), wobei das Verfahren folgende Schritte aufweist:
Messen der Position des Bremsbetätigungshebels unter Verwendung einer Bremsenkontrolleinrichtung, wobei die Bremsenkontrolleinrichtung (2) mindestens eine Sensorvorrichtung zum Messen der Position des Bremsbetätigungshebels aufweist;
Übermitteln von Information hinsichtlich der Position des Bremsbetätigungshebels an eine Steuerung (16); und
durch die Steuerung erfolgende Abgabe von Angaben zum Einstellen der wirksamen Länge eines Bremssells (12a, 12b; 48a, 48b), um die Position des Bremsbetätigungshebels (10; 60) einzustellen.

11. Verfahren nach Anspruch 10,
wobei im Gebrauch die beabsichtigte Bremsbetätigungshebel-Position durch einen von einem Benutzer zu betätigenden Hebel (20; 50) vorgegeben wird.

12. Verfahren nach Anspruch 11, das weiterhin folgende Schritte aufweist:
Verbringen des von einem Benutzer zu betätigenden Hebels (20; 50) in eine Position, die anzelgt, dass sich der Bremsbetätigungshebel (10; 60) in einer Aus-Position befindet;
durch die Steuerung (16) erfolgende Abgabe von Angaben zum Einstellen der wirksamen Länge des Bremsseils; und
Verwenden der Bremsenkontrolleinrichtung (2) zum Messen der von dem Bremsbetätigungshebel zurückgelegten Distanz nach Maßgabe der Einstellangaben,
wobei die Steuerung die Abgabe von Angaben fortsetzt, um die wirksame Länge des Bramssells einzustellen, bis sich der Bremsbetätigungshebel über eine vorbestimmte Distanz bewegt hat.

13. Verfahren nach Anspruch 12,
wobei die vorbestimmte Distanz derart vorgegeben wird, dass sich der Bremsbetätigungshebel (10; 60) in eine Position bewegt, in der eine Bremswirkung unmittelbar vor ihrem Beginn steht.

14. Verfahren nach Anspruch 12,
wobei die vorbestimmte Distanz derart vorgegeben wird, dass sich der Bremsbetätigungshebel (10; 60) in eine maximale Bremsposition bewegt,
wobei das Verfahren ferner den Schritt aufweist, bei dem die Steuerung (16) zum Abgeben von Angaben zum Einstellen der wirksame Länge des Bremsseils verwendet wird, bis sich der Bremsbetätigungshebel in seine Ausgangsposition zurückbewegt hat.

15. Verfahren nach einem der Ansprüche 10 bis 14.
bei dem weiterhin Information hinsichtlich der Angaben an einen Benutzer unter Verwendung einer Anzeige (34) angezeigt wird.

16. Verfahren nach einem der Ansprüche 10 bis 15,
bei dem weiterhin die Angaben an ein Werkzeug (18) gegeben werden, das zum Einstellen der wirksamen Länge des Bremsseils nach Maßgabe der Angaben ausgebildet ist.

17. Verfahren nach einem der Ansprüche 10 bis 16,
wobei die Bremsenkontrolleinrichtung (2) die Position relativ zu einer Ausgangsposition misst.

18. Verfahren nach einem der Ansprüche 10 bis 17,
bei dem ferner vor der Steuerung der Position des Bremsbetätigungshebels die Bremsenkontrolleinrichtung (2) an einem Bremssattel angebracht wird.

## Revendications

1. Système d'ajustement de câble de frein (14) comprenant :
■ un dispositif de contrôle de frein (2) adapté pour détecter la position d'un levier de manoeuvre de frein (10 ; 60) ; et
■ un contrôleur (16) adapté pour recevoir des informations du dispositif de contrôle de frein relatives à la position du levier de manoeuvre de frein,
■ dans lequel le dispositif de contrôle de frein comprend au moins un dispositif de détection (8, 8') pour mesurer la position du levier de manoeuvre de frein ; et
■ dans lequel le contrôleur est adapté pour émettre en sortie des instructions pour ajuster la longueur effective d'un câble de frein (12a, 12b ; 48a, 48b), afin d'ajuster la position du levier de manoeuvre de frein (10 ; 60).

2. Système selon la revendication 1, dans lequel, en fonctionnement, le au moins un dispositif de détection (8, 8') est en contact élastique avec le levier de manoeuvre de frein.

3. Système selon la revendication 1 ou la revendication 2 et comprenant en outre au moins un affichage (34) pour amener les informations relatives auxdites instructions à un utilisateur.

4. Système selon la revendication 3, dans lequel l'utilisateur ajuste manuellement la longueur effective du câble de frein en réponse auxdites instructions.

5. Système selon l'une quelconque des revendications 1 à 3 et comprenant en outre un outil (18) adapté pour ajuster la longueur effective dudit câble de frein en réponse auxdites instructions du contrôleur.

6. Système selon l'une quelconque des revendications précédentes et comprenant en outre une disposition d'ajustement de câble, dans lequel la longueur effective du câble de frein peut être ajustée via la disposition d'ajustement de frein.

7. Système selon l'une quelconque des revendications précédentes, dans lequel le dispositif de contrôle de frein (2) est agencé pour mesurer une position par rapport à une position de départ.

8. Système selon l'une quelconque des revendications précédentes, dans lequel le dispositif de contrôle de frein (2) peut être monté de manière amovible sur un étrier de frein d'un frein à disque (6a, 6b), dans lequel le levier de manoeuvre de frein est un levier de manoeuvre d'étrier de frein.

9. Système selon l'une quelconque des revendications 1 à 8, dans lequel le dispositif de contrôle de frein (2) peut être monté de manière amovible sur un système de frein à tambour (46a, 46b).

10. Procédé pour contrôler la position d'un levier de manoeuvre de frein (10 ; 60), le procédé comprenant les étapes consistant à :
■ mesurer la position du levier de manoeuvre de frein à l'aide d'un dispositif de contrôle de frein, le dispositif de contrôle de frein (2) comprenant au moins un dispositif de détection pour mesurer la position du levier de manoeuvre de frein ;
■ transmettre des informations relatives à la position du levier de manoeuvre de frein à un contrôleur (16) ; et
■ le contrôleur émet en sortie des instructions pour ajuster la longueur effective d'un câble de frein (12a, 12b ; 48a, 48b), afin d'ajuster la position du levier de manoeuvre de frein (10 ; 60).

11. Procédé selon la revendication 10 dans lequel, en fonctionnement, la position du levier de manoeuvre de frein souhaitée est définie par un levier actionné par l'utilisateur (20 ; 50).

12. Procédé selon la revendication 11 et comprenant en outre les étapes consistant à :
■ amener le levier actionné par l'utilisateur (20 ; 50) dans une position indiquant que le levier de manoeuvre de frein (10 ; 60) est dans une position d'arrêt ;
■ le contrôleur (16) émet en sortie des instructions pour ajuster la longueur effective du câble de frein ; et
■ l'utilisation du dispositif de contrôle de frein (2) pour mesurer la distance parcourue par le levier de manoeuvre de frein en réponse aux instructions d'ajustement,
dans lequel le contrôleur continue à émettre en sortie des instructions pour ajuster la longueur effective du câble de frein jusqu'à ce que le levier de manoeuvre de frein se soit déplacé sur une distance prédéfinie.

13. Procédé selon la revendication 12, dans lequel la distance prédéfinie est définie de telle sorte que le levier de manoeuvre de frein (10 ; 60) se déplace dans une position où une action de freinage est sur le point de commencer.

14. Procédé selon la revendication 12, dans lequel la distance prédéfinie est définie de telle sorte que le levier de manoeuvre de frein (10 ; 60) se déplace dans une position de freinage maximum, le procédé comprenant en outre les étapes d'utilisation du contrôleur (16) pour émettre en sortie des instructions pour ajuster la longueur effective du câble de frein jusqu'à ce que le levier de manoeuvre de frein soit revenu à sa position de départ.

15. Procédé selon l'une quelconque des revendications 10 à 14 et comprenant en outre les étapes d'affichage d'informations relatives auxdites instructions pour un utilisateur à l'aide d'un affichage (34).

16. Procédé selon l'une quelconque des revendications 10 à 15 et comprenant en outre l'étape d'émission en sortie desdites instructions pour un outil (18) adapté pour ajuster la longueur effective dudit câble de frein en réponse auxdites instructions.

17. Procédé selon l'une quelconque des revendications 10 à 16, dans lequel le dispositif de contrôle de frein (2) mesure une position par rapport à une position de départ.

18. Procédé selon l'une quelconque des revendications 10 à 17 et comprenant en outre l'étape de fixation du dispositif de contrôle de frein (2) à un étrier de frein avant de contrôler la position du levier de manoeuvre de frein.
